# EUROPEAN PATENT SPECIFICATION

(11) **EP 3 519 766 B1**
(45) Date of publication and mention of the grant of the patent: **04.11.2020**
(21) Application number: 17793721.6
(22) Date of filing: 27.09.2017
(51) Int. Cl.: G01B 21/04, G05B 19/401

(54) **METHOD AND APPARATUS FOR MEASURING AN OBJECT**
VERFAHREN UND VORRICHTUNG ZUM MESSEN EINES OBJEKTS
PROCÉDÉ ET APPAREIL POUR LA MESURE D'UN OBJET

(30) Priority: 28.09.2016 GB 201616415
(43) Date of publication of application: 07.08.2019
(73) Proprietor: Renishaw PLC, Wotton-under-Edge, Gloucestershire GL12 8JR (GB)
(72) Inventor: MARSHALL, Derek, Wotton-under-Edge Gloucestershire GL12 8JR (GB); OULD, John Charles, Wotton-under-Edge Gloucestershire GL12 8JR (GB)
(74) Representative: Dunn, Paul Edward
(86) International application number: PCT/GB2017/052884
(87) International publication number: WO 2018/060693

(56) References cited:
- US-A1- 2007 033 819
- US-A1- 2010 176 099
- US-A1- 2016 195 382

## Description

The present invention relates to a method and apparatus for measuring an object and in particular to a technique for measuring an offset of an object using a scanning probe carried by a machine tool.

Machine tools for manufacturing workpieces are known. It is also known that a measurement probe can be mounted in the spindle of such a machine tool to allow certain features of a workpiece to be measured using the machine tool. Such measurements may be used to establish the offset of the workpiece prior to a machining process. Measurements may also be performed to inspect a machined workpiece to verify a cutting operation has been performed correctly.

One known way to measure a workpiece using a machine tool is to use a spindle mounted scanning probe that comprises a deflectable stylus and one or more transducers for measuring stylus deflection. The stylus deflection measurements acquired by such a scanning probe are typically termed "probe data" and the measured position of the scanning probe within the coordinate system of the machine tool is typically termed "machine position data". In use, the scanning probe is moved along a certain scan path relative to the object. The machine position data generated as the scan path is traversed are combined with the corresponding probe data to establish, after suitable calibration, the position of points on the surface of the object.

The process of combining probe data and machine position data is, for a variety of reasons, not easy to implement in practice on most machine tool systems. For example, difficulties can arise even if the machine tool does include an external data link (e.g. a RS-232, file polling or software connection) for transferring information to an external processing system. In particular, such a data link can often be difficult to configure and slower feed rates may need to be used which negatively impacts on cycle times.

A measurement method has been described previously in WO2005/031254 which avoids the need to obtain machine position data from the machine tool altogether.

In particular, probe data is combined with assumed machine position data instead of using corresponding machine position data output from the machine tool. An example of measuring the offset of a part in this manner is described in WO2005/031254 with reference to figure 12 thereof. This technique improves cycle times, but it has been found by the present inventors that measurement errors can sometimes be introduced. In particular, errors have been found to arise when using a scanning probe that measures only the magnitude and not the direction of any imparted stylus deflections that arise when a scan path is traversed. For example, with such a probe there can be variations in the spring force of the probe that arise with different deflection angles or magnitudes making it difficult to distinguish the proportion of stylus deflection that is attributable to stylus drag.

According to a first aspect of the present invention, which is defined in the independent claim 1, there is provided a method for measuring an object using a machine tool carrying a scanning probe, the machine tool being arranged to drive the scanning probe along a pre-programmed scan path relative to the object and the scanning probe being arranged to collect probe data describing a spatial relationship of the surface of the object relative to the scanning probe whilst the scan path is traversed, the method comprising the steps of;
a) driving the scanning probe along the scan path whilst collecting probe data,
b) analysing the probe data collected in step (a) to determine an offset of the object, the offset of the object being a translation and/or rotation and/or scaling of the object,
c) translating and/or rotating and/or scaling the scan path relative to the object by a known amount and repeating steps (a) and (b) to re-determine the offset of the object, and
d) generating an error map or function that describes the difference between the re-determined offset and an offset expected to result from the applied translation and/or rotation and/or scaling of the scan path relative to the object. The present invention, in the first aspect, thus relates to a method for measuring an object (e.g. a part or workpiece) using a scanning probe carried by a machine tool.

The machine tool is arranged to move or drive the scanning probe along a pre-programmed scan path relative to the object (e.g. under the control of a machine tool controller). The scanning probe is arranged to capture so-called "probe data" which describes a spatial relationship of the surface of the object relative to the scanning probe whilst the scan path is being traversed. For example, the probe data may provide a measure of the position of points on the surface of the object in a probe coordinate system that is defined relative to the scanning probe. In an alternative embodiment, the scanning probe may have a deflectable stylus for contacting the object and the spatial relationship described by the probe data may relate to only the magnitude (not direction) of stylus deflection.

The method of this first aspect of the invention comprises a step (a) of driving the scanning probe along the scan path whilst collecting probe data. In other words, a stream of probe data (e.g. stylus deflection data) are collected as the probe moves or scans the surface of the object. In step (b) the collected probe data is analysed to determine or measure an offset of the object, the offset of the object being a translation and/or rotation and/or scaling of the object. The offset of the object (i.e. at least one of the translation, rotation and scaling of the object) may be determined relative to a nominal position and/or orientation and/or size of the object. It should be noted here that such an offset may be an offset of the entire object or it may be an offset of a part of the object; for example, the offset of a certain feature or certain features of the object may be determined. In one example, the object may be held in a fixture and the offset may describe the position of the centre of the whole object relative to a nominal position in which the object is expected to be held by the fixture. Alternatively, the offset of a feature formed in the object (e.g. a bore within the object) may be found.

A step (c) is then performed of translating and/or rotating and/or scaling the scan path relative to the object by a known amount. As explained below, this may be achieved by shifting or scaling the scan path relative to the object in a variety of different ways. The offset of the object is then re-determined (i.e. following the shift or imparted offset in scan path). An error map or function is generated in step (d) of the method that describes the difference between the re-determined offset and the offset that would have been expected to result from the applied translation and/or rotation of the scan path relative to the object. Advantageously, step (c) is repeated a plurality of times to determine a plurality of offsets for a plurality of translated and/or rotated scan paths. In this manner an error map or function can be generated that describes the differences between multiple determined offsets and the expected offset resulting from the known shift in scan path (i.e. scan path rotation and/or translation) relative to the object. As described below, these error corrections can be applied to subsequent measurements of similar objects using the machine tool thereby improving the accuracy of such offset measurements. In particular, such a correction can reduce or remove the errors due to stylus drag that can occur when using a scanning probe having a deflectable stylus for contacting the object being measured.

The above described method can thus be used to generate an error map or function that allows different offsets measured by scanning the object to be linked or mapped back to a single reference offset, such as the first offset determined in steps (a) and (b). It is also possible to tie or anchor all the offsets that are determined using the scanning probe to an offset of the object that is known (e.g. measured in some other way). Advantageously, the object being measured to generate the error map or function has a known offset. For example, the offset in position and/or orientation of the object may be known relative to the nominal position and/or orientation of the object. Similarly, an offset in a size of the object may be known relative to a nominal size. An offset correction may then be calculated that describes the difference between the measured offset of step (b) and the known offset. The offset correction may then be applied to each re-measured offset that is generated in step (c). The known offset of the object may be measured using a measurement process that is more accurate, but slower to perform, than the scanning process of step (a) of the method. The known offset may have been measured using a different measurement probe to the scanning probe used to scan the object.

Advantageously, the known offset may be determined by operating the scanning probe in a non-scanning mode to measure a plurality of points on the surface of the object. The non-scanning mode may, for example, comprise a touch trigger mode. The collection of touch trigger points and the use of such touch trigger points to correct scanning measurements is described in WO2015/036796.

It should be noted that step (b) of the method may use the probe data and any other suitable information to determine the offset of the object. Advantageously, step (b) comprises analysing the probe data alone to measure the offset of the object. In other words, the analysis of the probe data is preferably performed without using any of the associated machine position data; this means the processing of the probe data to establish the offset of the object can begin without having to wait for machine position data to be extracted from the machine tool. Alternatively, a sub-set of the machine position data (e.g. a few machine position readings) generated during the scan could be combined with the probe data. It is advantageous, especially for certain types of machine tool, for the analysis not to require any machine position data from the machine tool that was collected whilst the scanning probe was driven around the object during step (a). However, if some machine position data is available then it could be used during the analysis of step (b). The offset determined in step (b) may be only a translation of the object. The offset determined in step (b) may be only a rotation of the object. The offset determined in step (b) may be only a scaling of the object. The offset may comprise two of the translation, rotation and scaling of the object. The offset may comprise the translation and rotation and scaling of the object.

The scanning probe is preferably arranged so as to remain within its operating or working range for each repetition of step (a). In other words, the scanning probe has a working range and the translation and/or rotation and/or scaling applied in step (c) produces relative movement between the scanning probe and the object that keeps the scanning probe within its working range during the repetition of step (a). The translation and/or rotation and/or scaling applied in step (c) thus produces relative movement between the scanning probe and the object that is small enough to keep the scanning probe within its working range when it is driven along the shifted scan path. Advantageously, the translation and/or rotation and/or scaling applied in step (c) produces relative movement between the scanning probe and the object of less than 10mm, more preferably less than 5mm, more preferably less than 2mm and more preferably less than 1mm.

The translation and/or rotation and/or scaling of the scan path of step (c) may be applied in a variety of ways. For example, step (c) may comprise physically moving the object relative to the bed to which it is affixed by a known amount. This motion may be provided by a motion platform or manual adjustment provided on the fixture or machine tool bed. Alternatively, the object may be affixed to the bed of the machine tool (e.g. the object may be secured to the bed of the machine tool in a fixed positon by a fixture). It should be noted that the bed to which the object is attached may itself be stationary or it may move (e.g. translate/rotate about one or more axes) under control of the machine tool. Step (c) may then comprise applying a rotation, translation and/or scaling factor to the scan path in order to introduce the translation and/or rotation and/or scaling of the scan path relative to the object. For example, the set of movement commands that define the scan path may be left unaltered, but a workpiece offset variable may be adjusted within the machine tool controller to cause the scan path to shift (e.g. translate and/or rotate) relative to the object. A workpiece offset that scales the scan path (e.g. in one or multiple directions) may also be used to provide differently scaled scan paths.

It should also be noted that despite being more complicated to implement, it would also be possible to adjust the scan path without using the machine tool workpiece offsets. For example, a CAD/CAM system could generate a series of part programs that each define a set of movement commands that provide the translated, rotated and/or scaled scan paths.

For a contact scanning probe with a stylus, the above described change in scan path (irrespective of how it is implemented) increases or decreases the magnitude of stylus deflection which in turn alters the drag experienced by the stylus tip as it is pulled along the surface of the object. The error map or function generated in step (d) thus accounts for the measurement errors arising from the drag and other similar effects.

The method may be implemented using any scanning probe. The scanning probe may be a non-contact (e.g. optical, capacitive, inductive) scanning probe. The scanning probe may be a contact scanning probe. In particular, a contact scanning probe may be provided that has a deflectable stylus. The stylus may be deflectable relative to the housing of the scanning probe in any one of two mutually perpendicular directions or in any of three mutually perpendicular directions. At least one transducer may be provided within the scanning probe for measuring the stylus deflection (i.e. to generate probe data that can be output by the scanning probe). The scanning probe may include a sensor that can only measure the magnitude (not direction) of stylus deflection; i.e. the scanning probe may comprise a multidirectional, single output scanning probe that generates probe data describing only the magnitude of stylus deflection. For example, the scanning probe may comprise a TC76-Digilog or a TC64-Digilog scanning probe as manufactured by Blum Novotest GmbH, Germany or a model G25 probe sold by Marposs, Italy. Alternatively, the scanning probe may comprise sensors that can measure both the magnitude and direction of any stylus deflection. For example, the analogue measurement probe may generate three output signals that relate to the deflection of the stylus tip in three mutually orthogonal directions. The SPRINT (OSP-60) probing system manufactured by Renishaw plc, Wotton-Under-Edge, UK is an example of such a scanning probe.

It should be noted for completeness that scanning probes as described herein (which can sometimes also be called analogue probes) are different to so-called touch trigger probes. Touch trigger probes, which are sometimes termed digital or switching type probes, simply act as a switch. Deflection of the probe stylus from a rest position (e.g. when the stylus tip is moved into contact with the surface of an object) causes a trigger signal to be issued that is fed to a "SKIP" (or equivalent) input of the machine tool. The machine tool measures the position of the touch trigger probe in the machine coordinate system (x,y,z) at the instant the trigger signal is issued, thereby allowing (with suitable calibration) the position of a single point on the surface of the object to be measured. A touch trigger probe is thus repeatedly driven into, and out of, contact with the surface of an object to take point-by-point position measurements of an object. Touch trigger probes are thus different to scanning probes in that they do not allow the collection of probe data whilst being scanned along a path on the surface of a workpiece. The method of the present invention is applicable only to scanning probes, although such a scanning probe could also be operable in a touch trigger mode to allow both scanning and touch trigger measurements to be taken.

The error map or function generated by the above described process can be used to correct measurements of further objects nominally identical to the object used to generate the error map or function. In particular, it can conveniently be used to correct the offset determined for further objects that are derived from probe data collected by traversing the same scan path that was used during the error map or function generation. The method may thus comprise the step of removing the object from the machine tool and placing a nominally identical object in a nominally identical position on the machine tool. For example, the object used for error map generation may be removed from a fixture on the machine tool bed and the new object may be secured in that fixture.

A step may then be performed of driving the scanning probe along the scan path (i.e. nominally the same scan path that was used for error map generation) whilst collecting probe data. An offset may then be calculated from the collected probe data alone; e.g. by performing the same analysis as step (b). The measured offset can then be corrected (e.g. for drag effects etc) using the error map that was generated in step (d). This may be repeated multiple times to measure a series of nominally identical objects. The object may be a workpiece (e.g. to be machined or already cut by the machine tool). The object may be a consumer electronics component.

According to a second aspect of the invention, which is defined in the method claim 13, there is provided a method for measuring an object using a machine tool carrying a scanning probe, the machine tool being arranged to drive the scanning probe along a pre-programmed scan path relative to the object and the scanning probe being arranged to collect probe data describing a spatial relationship of the surface of the object relative to the scanning probe whilst the scan path is traversed, the method comprising the steps of; driving the scanning probe along the scan path whilst collecting probe data, analysing the collected probe data to measure an offset of the object, the offset of the object being a translation and/or rotation and/or scaling of the object and correcting the measured offset of the object using an error map or function calculated using the method according to the first aspect of the invention.

The error map or function may be generated in advance of the object measurements. Preferably, the scan path used for measuring the offset is the same scan path used when calculating the error map or function. The measured offset may describe the translation and/or rotation and/or scaling of the object relative to a nominal position and/or orientation and/or size of the object. Analysis of the probe data may be performed without using any machine position data that may be generated by the machine tool as the scan path is traversed.

According to a third aspect of the present invention, which is defined in claim 14, there is provided a computer program comprising instructions which, when executed on a suitable computer, implements the method according to the first and/or second aspects of the invention. The invention also extends to a computer program product comprising instructions which when executed by a computer causes the computer to perform the above described method. The computer program product may comprise a data carrier, a storage medium, a computer readable medium (e.g. a non-transitory computer readable medium) or a signal (e.g. a transitory medium) etc.

According to a fourth aspect of the invention, which is defined in the independent claim 15, an apparatus is provided for measuring an object, comprising a machine tool carrying a scanning probe, the machine tool comprising a controller for driving the scanning probe along a pre-programmed scan path relative to the object, the scanning probe being arranged to collect probe data describing a spatial relationship of the surface of the object relative to the scanning probe whilst the scan path is traversed, the apparatus being arranged to; a) drive the scanning probe along the scan path whilst collecting probe data describing the position of points on the surface of the object, b) analyse the probe data collected in step (a) to determine an offset of the object, the offset of the object being a translation and/or rotation and/or scaling of the object, c) translate and/or rotate and/or scale the scan path relative to the object by a known amount and repeat steps (a) and (b) to re-determined the offset of the object, and d) generate and store an error map or function that describes the difference between the re-measured offset and an offset expected to result from the applied translation and/or rotation and/or scaling of the scan path relative to the object. The analysis of step (b) may be performed by the controller of the machine tool or a separate computer. The apparatus may include any of the features described above for the analogous method.

A method, which does not form part of the claimed invention, is also described herein for determining the offset (e.g. position and/or orientation and/or size) of each of a series of nominally identical workpieces mounted on a machine tool. The method may comprise a step of taking a first workpiece in the series of workpieces. The first workpiece may have a known (e.g. previously measured) position and/or orientation and/or size in the machine coordinate system. A step may also be performed that involves using the machine tool to move the scanning probe along a known scan path relative to the first workpiece whilst collecting probe data from the scanning probe. The probe data may describe a spatial relationship of the surface of the object relative to the scanning probe (e.g. a position of the surface of the workpiece relative to the probe). The scanning probe may have a deflectable stylus and the probe data may describe the magnitude of stylus deflection. The probe data may be used, preferably without any corresponding machine position data, to calculate a measured position and/or orientation of the first workpiece in the machine coordinate system. A position and/or orientation and/or size error may then be calculated from the difference between the known position and/or orientation and/or size of the first workpiece and the measured position and/or orientation and/or size of the first workpiece. A further step of adjusting the position and/or orientation and/or of the workpiece relative to the scan path may then be performed. A new position and/or orientation and/or size of the object may be calculated using probe data collected whilst the scanning probe is driven along the adjusted scan path and a further error may be calculated. A step of generating an error map or function to describe the generated position and/or orientation and/or size errors may then be performed. The method may also include any of the features described above.

The invention will now be described, by way of example only, with reference to the accompanying drawings in which;
Figure 1 illustrates a machine tool carrying a spindle mounted scanning probe,
Figure 2 shows an offset of the part relative to its nominal location within the fixture,
Figure 3 shows a scan path for the scanning probe relative to the workpiece,
Figure 4 shows the probe data collected when the scanning probe traversed the scan path shown in figure 3,
Figure 5 shows the effect of shifting the object relative to the scan path, and
Figure 6 shows a range of data collected for scans of the object in a plurality of shifted positions relative to the scan path.

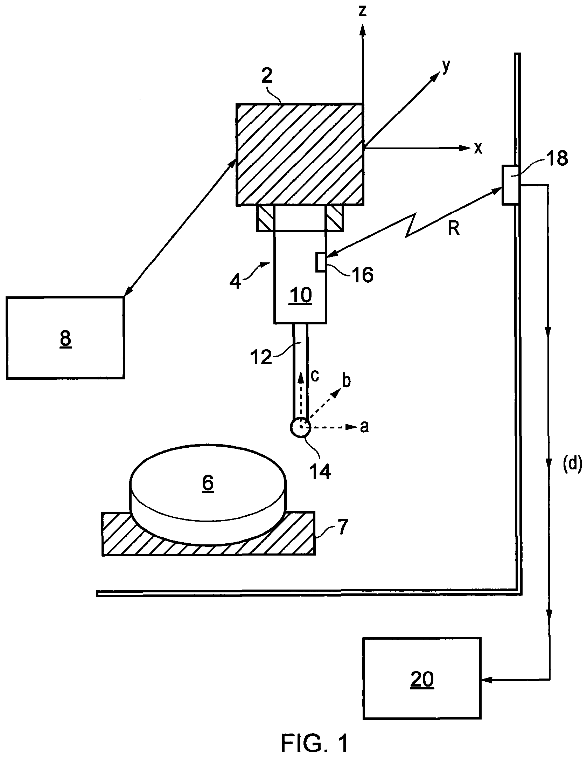

Referring to figure 1, a machine tool is schematically illustrated having a spindle 2 holding a scanning probe 4.

The machine tool comprises motors (not shown) for moving the spindle 2 relative to a workpiece 6 located on a fixture or workpiece holder 7 within the work area of the machine tool. The location of the spindle within the work area of the machine is accurately measured in a known manner using encoders or the like; such measurements provide spindle position data (herein termed "machine position data") that is defined in the machine co-ordinate system (x,y,z). A computer numerical controller (CNC) 8 of the machine tool controls movement of the spindle 2 within the work area of the machine tool and also receives the machine position data describing spindle position (x,y,z).

The scanning probe 4 comprises a probe body or housing 10 that is attached to the spindle 2 of the machine tool using a standard releasable tool shank connection. The probe 4 also comprises a workpiece contacting stylus 12 that protrudes from the housing. A ruby stylus ball 14 is provided at the tip of the stylus 12 for contacting the associated workpiece 6. The stylus tip can deflect relative to the probe housing 10 and a transducer system within the probe body 10 measures the magnitude of deflection of the stylus. The stylus deflection data acquired by the scanning probe is herein termed "probe data". The probe 4 also comprises a transmitter/receiver portion 16 that communicates with a corresponding receiver/transmitter portion of a remote probe interface 18. In this manner, probe data (e.g. resultant stylus deflection values "d") from the scanning probe 4 are transmitted over a wireless communications link to the interface 18. A general purpose computer 20 is also provided to receive the probe data from the probe interface 18.

In use, the CNC 8 runs a so-called part program that contains a series of command codes that cause the scanning probe to be moved or driven along a certain path in space. Such a driven path is often termed a tool path, although because a scanning probe rather than a cutting tool is being carried it can also be termed a scan path. Probe data (i.e. "d" data values describing stylus deflection) and machine position data (i.e. x, y, z values describing the position of the scanning probe in the machine coordinate system) are acquired as the scanning probe is driven along the scan path. Probe data is typically collected at a pre-set rate (e.g. a stylus deflection reading may be taken every few tens of milliseconds). The CNC 8 can also be programmed to move the probe around the scan path at a certain feed rate. The feed rate is typically a variable that can be adjusted by the user to control the speed at which the spindle is moved around in space according to the instructions of the part program. For example, feed rate can be defined using a parameter that is set in the part program (e.g. the command F 1000 may be used to set the feed-rate for subsequent interpolated moves to 1000 mm/minute).

The apparatus of figure 1 may be used to determine the location, orientation and scaling of a workpiece (or features of a workpiece) before a machining process. In other words, the apparatus may find the offset of the workpiece; the offset being a rotational offset and/or a translational offset and/or a scaling offset. The measured offset may then be used by the cutting program when machining the workpiece. For example, the path of a cutting tool around the workpiece may be translated and/or rotated based on the workpiece offset measured using the scanning process.

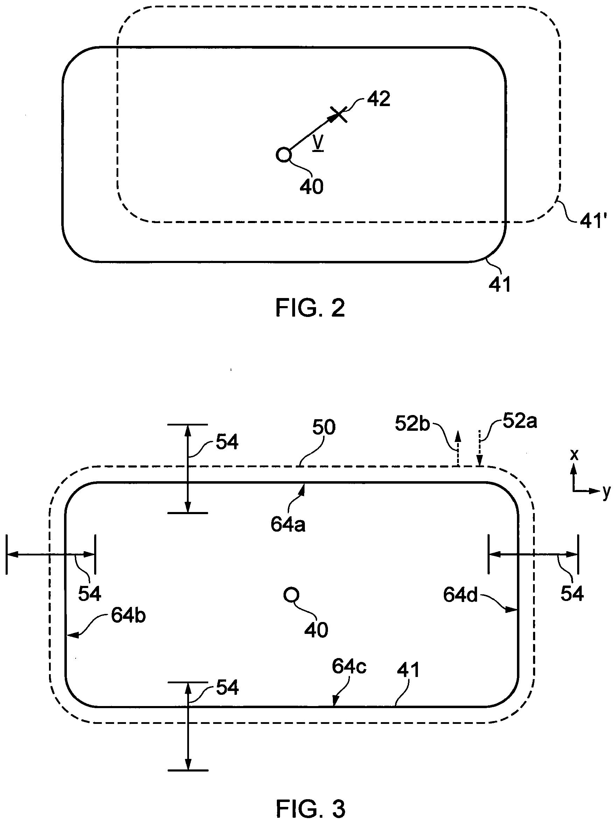

Figure 2 illustrates the nominal centre position 40 of a substantially rectangular workpiece 41 held in a fixture of the machine tool of the type described with reference to figure 1. Although a good quality fixture (e.g. as used in the manufacture of consumer electronics) can hold a workpiece to within 0.25mm or so of a nominal position, this positioning accuracy may still not be sufficiently accurate for some machining applications. The actual centre position 42 of the workpiece is also shown in figure 2. In this simple example, it can be seen that the actual position 42 of the centre of the workpiece 41' is offset from the nominal centre position 40 by a vector V, but there is no rotation away from the nominal orientation. The translation vector V is thus the positional offset that needs to be measured in this example.

Figure 3 shows the scan path 50 around which the scanning probe is driven relative to the workpiece 41 having a centre located in the nominal centre position 40 shown in figure 2. The scan path 50 includes movements 52a and 52b that bring the scanning probe into and out of contact with the surface of the workpiece. The scanning probe 4 has a certain deflection range over which it can measure stylus deflection which means that there is effectively an acceptable zone or region in which the workpiece may be located relative to the scan path 50. The arrows 54 illustrate the range of stylus deflection that can be measured whilst the scanning probe is driven around the scan path 50. In other words, the scanning probe can acquire measurements of any surface located between the upper and lower stylus deflection limits whilst the scan path 50 is traversed.

A typical fixture can locate a workpiece to within about 0.25mm, whereas a typical scanning probe has a working stylus deflection range of around ± 0.5mm. This means it is typically possible for a single scan path to be selected (e.g. based on the nominal workpiece position and orientation) that allows the position and/or orientation of a workpiece to be measured. As will be explained below, this also allows probe data alone to be used to measure any offset (angular or translational) of the workpiece from the nominal (fixture defined) position of the workpiece relative to the scan path.

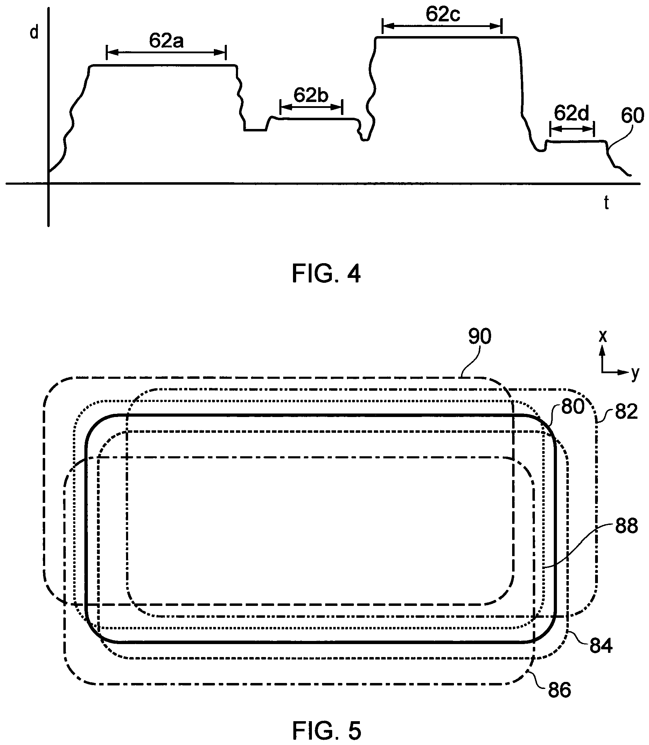

Figure 4 illustrates the probe data 60 collected as the scanning probe is driven around the scan path 50 relative to the workpiece. The variation in probe deflection that results from the offset of the workpiece from the nominal position can be seen in the collected probe data alone. In particular, four segments of probe data (62a, 62b, 62c and 62d) can be identified that are collected from the four flat sides of the workpiece respectively (i.e. sides 64a, 64b, 64c and 64d shown in figure 3). The scan path may be set so that the probe deflection (and hence the magnitude of the probe data) is substantially invariant for a workpiece placed in the nominal position and orientation defined by the fixture. Any variation between measured stylus deflections for opposed sides of the rectangular workpiece may then be used to measure an offset of the workpiece. For example, the difference in magnitude of the probe data of segments 62a and 62c may be used to define the offset in the x-axis whereas the difference in magnitude of the probe data of segments 62b and 62d may be used to define an offset along the y-axis. It should be noted that although the workpiece is shown aligned with the x and y axes for simplicity, this is not a requirement.

In addition to probe data collected by scanning the measurement probe along the surface, it is also possible to measure the position of the workpiece using a more accurate (but slower) measurement technique. For example, a plurality of so-called touch-trigger measurements may be collected before or after the probe data is acquired using the scanning process. This allows a more accurate measurement of the position and/or orientation of the workpiece to be established. The touch trigger points may then be used to correct the probe data collected during the scanning procedure. Such a technique for correcting scanning measurements using touch trigger measurements is described in more detail in WO2015/036796.

Although touch trigger measurements can correct measurements taken using probe data collected during the scanning process, it has been found by the present inventors that errors still occur if the workpiece is moved relative to the predefined scan path even by a small amount. This is because the scanning probe then starts to operate within a different range of stylus deflections and hence there are different amounts of stylus drag. In particular, shifting the position of the workpiece by less than half a millimetre has been found to lead to errors in the measured offset of the order of tens of microns. It is impractical to collect and compare touch trigger and probe data for multiple different workpiece positions, but the inventors have realised that this is not necessary. Instead, the present inventors have devised a technique in which an error map or function can be established to account for offset errors that arise when probe data is collected from workpieces offset from the nominal (i.e. fixture defined) position by different amounts.

Referring next to figure 5, it will be described how multiple measurements of the workpiece can be used to generate an error map.

Figure 5 shows a first position 80 of a workpiece as measured by moving a scanning probe around the scan path that is shown in figure 3. The first position 80 is defined in the machine coordinate system by applying the measured offset (i.e. calculated using the probe data collected from the scan) to the nominal position of the workpiece. Although not essential, the first position 80 may also be corrected by remeasuring the workpiece using a series of touch trigger measurements. This correction of the first position 80 using touch trigger measurements ensures that this home or reference positon is known with as much accuracy as possible in the machine coordinate system.

After determining the first position 80, the position of the scan path is shifted relative to workpiece by a known amount. This shift may be performed by physically moving the object (e.g. by adjusting its position in the fixture), but in this example the shift is performed by applying a translation to the position of the scan path relative to the object. This is achieved by applying a so-called "workpiece offset" to the scan path; this effectively causes the workpiece to move within the machine coordinate system. It should be noted here that the "workpiece offset" applied to the scan path to cause it to shift relative to the workpiece during scanning is the same "workpiece offset" variable that is applied to the cutting path as a result of the measurement process to adjust for the measured offset in workpiece position.

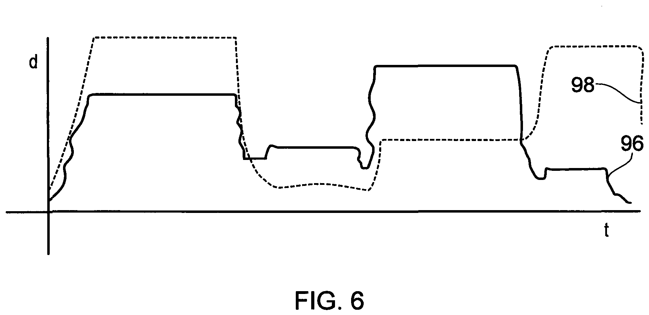

The scanning probe is then moved around the scan path and the collected probe data is analysed to measure a second position 82 of the workpiece. As per the first measurement, the probe data alone is used to measure the second position 82. The probe data for the scans of workpiece at the first position and the second position are illustrated in figure 6 as plots 96 and 98 respectively. For an error-free system, the applied workpiece shift (i.e. the workpiece offset applied to the scan path) would be identical to the measured positional difference between the first and second positions 80 and 82. However, due to inaccuracies of the scanning process (particularly variations in stylus drag) the expected and measured workpiece shifts differ. This difference or error is recorded as an entry in an error table. It should be noted that it has been found to be a good assumption that the offset actually applied by the machine tool very closely reflects the commanded offset; this is because machines tools can measure position very accurately over short distances.

The above process of shifting the scan path by a known amount and repeating the workpiece positon (scanning) measurement is performed multiple times. Figure 5 shows measured third, fourth, fifth and sixths positions 84, 86, 88 and 90 respectively. However, many tens, hundreds or even thousands of measurements could be acquired and the difference between the predicted and measured workpiece shift recorded in the error table. An error table is thus built up that defines errors associated with measured workpiece positions. In addition to translating the scan path by a known amount, rotation of the scan path would also be possible. The scan path may also be scaled thereby changing the size offset of the object. In such a case an error table could be provided in which rotational shifts in scan path and/or the scaling of the scan path are also stored. Instead of an error or look-up table, a mathematical function could be used to describe the offset errors. The translation, rotation and/or scaling of the scan path could also be considered to be examples of a scan path offset; it should be noted that such a "scan path offset" is different to the "object offset" that is determined following the scanning process.

After the error table is generated, it may be stored for future use. In particular, a new workpiece may subsequently be placed in the fixture of the machine tool. The scanning probe is then driven around the scan path and the collected probe data alone used to measure the position of the new workpiece. This position can then be corrected using the appropriate entry from the error table.

It should be remembered that the above are merely examples of the invention and the skilled person would appreciate the many variants that are possible.

## Claims

1. A method for measuring an object using a machine tool carrying a scanning probe, the machine tool being arranged to drive the scanning probe along a pre-programmed scan path relative to the object and the scanning probe being arranged to collect probe data describing a spatial relationship of the surface of the object relative to the scanning probe whilst the scan path is traversed, the method comprising the steps of;
a) driving the scanning probe along the scan path whilst collecting probe data,
b) analysing the probe data collected in step (a) to determine an offset of the object, the offset of the object being a translation and/or rotation and/or scaling of the object,
c) translating and/or rotating and/or scaling the scan path relative to the object by a known amount and repeating steps (a) and (b) to re-determine the offset of the object, and
d) generating an error map or function that describes the difference between the re-determined offset and an offset expected to result from the applied translation and/or rotation and/or scaling of the scan path relative to the object.

2. A method according to claim 1, wherein step (c) is repeated a plurality of times to determine a plurality of offsets for the plurality of translated and/or rotated scan paths.

3. A method according to any preceding claim, wherein the offset determined in step (b) describes the translation and/or rotation and/or scaling of the object relative to a nominal position and/or orientation of the object.

4. A method according to any preceding claim, wherein the object has a known offset and an offset correction is calculated that describes the difference between the offset determined in step (b) and the known offset, wherein the known offset is determined by operating the scanning probe in a touch trigger mode to measure a plurality of points on the surface of the object.

5. A method according to claim 4, wherein the offset correction is also applied to each re-determined offset.

6. A method according to any preceding claim, wherein the analysis of the probe data in step (b) is performed without using any of the machine position data that is generated by the machine tool whilst the scan path is traversed.

7. A method according to any preceding claim, wherein the scanning probe has a working range and the translation and/or rotation and/or scaling applied in step (c) produces relative movement between the scanning probe and the object that keeps the scanning probe within its working range during the repetition of step (a).

8. A method according to any preceding claim, wherein the translation and/or rotation applied in step (c) produces relative movement between the scanning probe and the object of less than 2mm.

9. A method according to any preceding claim, wherein the object is affixed to the bed of the machine tool and step (c) comprises applying a rotation or translation to the scan path in order to introduce the translation and/or rotation of the scan path relative to the object.

10. A method according to any preceding claim, wherein the scanning probe comprises a stylus having a tip for contacting the object and at least one transducer for measuring deflection of the stylus.

11. A method according to any preceding claim, wherein the scanning probe is a multidirectional, single output scanning probe that generates probe data describing only the magnitude of stylus deflection.

12. A method according to any preceding claim, comprising the steps of removing the object from the machine tool, placing a nominally identical object in a nominally identical position on the machine tool, driving the scanning probe along the scan path whilst collecting probe data, calculating an offset from the collected probe data and correcting the offset using the error map or function generated in step (d).

13. A method for measuring an object using a machine tool carrying a scanning probe, the machine tool being arranged to drive the scanning probe along a pre-programmed scan path relative to the object and the scanning probe being arranged to collect probe data describing a spatial relationship of the surface of the object relative to the scanning probe whilst the scan path is traversed, the method comprising the steps of;
calculating an error map or function using the method according to any one of claims 1 to 11,
driving the scanning probe along the scan path whilst collecting probe data,
analysing the collected probe data to determine an offset of the object, the offset of the object being a translation and/or rotation and/or scaling of the object, and
correcting the measured offset of the object using said error map or function.

14. A computer program comprising instructions which, when executed on a suitable computer, is adapted to cause an apparatus according to claim 15 to implement the method according to any one of claims 1-11 and 13.

15. An apparatus for measuring an object, comprising a machine tool carrying a scanning probe, the machine tool comprising a controller for driving the scanning probe along a pre-programmed scan path relative to the object, the scanning probe being arranged to collect probe data describing a spatial relationship of the surface of the object relative to the scanning probe whilst the scan path is traversed, the apparatus being arranged to;
a) drive the scanning probe along the scan path whilst collecting probe data describing the position of points on the surface of the object,
b) analyse the probe data collected in step (a) to determine an offset of the object, the offset of the object being a translation and/or rotation and/or scaling of the object,
c) translate and/or rotate and/or scale the scan path relative to the object by a known amount and repeat steps (a) and (b) to re-determine the offset of the object, and
d) generate and store an error map or function that describes the difference between the re-determined offset and an offset expected to result from the applied translation and/or rotation and/or scaling of the scan path relative to the object.

## Patentansprüche

1. Verfahren zum Messen eines Objekts unter Verwendung einer Werkzeugmaschine, die einen Abtasttaster trägt, wobei die Werkzeugmaschine so angeordnet ist, dass sie den Abtasttaster entlang eines vorprogrammierten Abtastpfads relativ zum Objekt antreibt, und der Abtasttaster so angeordnet ist, dass er Tasterdaten sammelt, die eine räumliche Beziehung der Fläche des Objekts relativ zum Abtasttaster beschreiben, während der Abtastpfad durchlaufen wird, wobei das Verfahren die Schritte umfasst:
a) Treiben des Abtasttasters entlang des Abtastpfads, während Tasterdaten gesammelt werden,
b) Analysieren der bei Schritt (a) gesammelten Tasterdaten, um einen Versatz des Objekts zu bestimmen, wobei der Versatz des Objekts eine Verschiebung und/oder Drehung und/oder Skalierung des Objekts ist,
c) Verschieben und/oder Drehen und/oder Skalieren des Abtastpfads relativ zum Objekt um einen bekannten Betrag und Wiederholen der Schritte (a) und (b), um den Versatz des Objekts neu zu bestimmen, und
d) Erzeugen eines Fehlerkennfelds oder einer Fehlerfunktion, das/die die Differenz zwischen dem neu bestimmten Versatz und einem Versatz beschreibt, der sich voraussichtlich aus der angewendeten Verschiebung und/oder Drehung und/oder Skalierung des Abtastpfads relativ zum Objekt ergibt.

2. Verfahren nach Anspruch 1, wobei Schritt (c) mehrere Male wiederholt wird, um eine Mehrzahl von Versätzen für die Mehrzahl von verschobenen und/oder gedrehten Abtastpfaden zu bestimmen.

3. Verfahren nach einem der vorhergehenden Ansprüche, wobei der in Schritt (b) bestimmte Versatz die Verschiebung und/oder Drehung und/oder Skalierung des Objekts relativ zu einer Nennposition und/oder Nennorientierung des Objekts beschreibt.

4. Verfahren nach einem der vorhergehenden Ansprüche, wobei das Objekt einen bekannten Versatz aufweist und eine Versatzkorrektur berechnet wird, die die Differenz zwischen dem in Schritt (b) bestimmten Versatz und dem bekannten Versatz beschreibt, wobei der bekannte Versatz durch Betreiben des Abtasttasters in einem Berührungsauslösemodus bestimmt wird, um eine Mehrzahl von Punkten an der Fläche des Objekts zu messen.

5. Verfahren nach Anspruch 4, wobei die Versatzkorrektur auch auf jeden neu bestimmten Versatz angewendet wird.

6. Verfahren nach einem der vorhergehenden Ansprüche, wobei die Analyse der Tasterdaten in Schritt (b) durchgeführt wird, ohne irgendwelche der Maschinenpositionsdaten zu verwenden, die von der Werkzeugmaschine erzeugt werden, während der Abtastpfad durchlaufen wird.

7. Verfahren nach einem der vorhergehenden Ansprüche, wobei der Abtasttaster einen Arbeitsbereich aufweist und die in Schritt (c) angewendete Verschiebung und/oder Drehung und/oder Skalierung eine Relativbewegung zwischen dem Abtasttaster und dem Objekt erzeugt, die den Abtasttaster während der Wiederholung von Schritt (a) in seinem Arbeitsbereich hält.

8. Verfahren nach einem der vorhergehenden Ansprüche, wobei die in Schritt (c) angewendete Verschiebung und/oder Drehung eine Relativbewegung zwischen dem Abtasttaster und dem Objekt von weniger als 2 mm erzeugt.

9. Verfahren nach einem der vorhergehenden Ansprüche, wobei das Objekt an dem Bett der Werkzeugmaschine befestigt ist und Schritt (c) das Anwenden einer Drehung oder Verschiebung auf den Abtastpfad umfasst, um die Verschiebung und/oder Drehung des Abtastpfades relativ zum Objekt einzuführen.

10. Verfahren nach einem der vorhergehenden Ansprüche, wobei der Abtasttaster einen Taststift mit einer Spitze zum Kontakt mit dem Objekt und mindestens einen Wandler zum Messen der Auslenkung des Taststifts umfasst.

11. Verfahren nach einem der vorhergehenden Ansprüche, wobei der Abtasttaster ein multidirektionaler Abtasttaster mit einzelnem Ausgang ist, der Tasterdaten erzeugt, die nur die Größe der Taststiftauslenkung beschreiben.

12. Verfahren nach einem der vorhergehenden Ansprüche, umfassend die Schritte zum Entfernen des Objekts von der Werkzeugmaschine, zum Platzieren eines nominell identischen Objekts in einer nominell identischen Position auf der Werkzeugmaschine, zum Treiben des Abtasttasters entlang des Abtastpfads, während Tasterdaten gesammelt werden, zum Berechnen eines Versatzes aus den gesammelten Tasterdaten und zum Korrigieren des Versatzes unter Verwendung des in Schritt (d) erzeugten Fehlerkennfeldes oder der in Schritt (d) erzeugten Fehlerfunktion.

13. Verfahren zum Messen eines Objekts unter Verwendung einer Werkzeugmaschine, die einen Abtasttaster trägt, wobei die Werkzeugmaschine so angeordnet ist, dass sie den Abtasttaster entlang eines vorprogrammierten Abtastpfads relativ zum Objekt antreibt, und der Abtasttaster so angeordnet ist, dass er Tasterdaten sammelt, die eine räumliche Beziehung der Fläche des Objekts relativ zum Abtasttaster beschreiben, während der Abtastpfad durchlaufen wird, wobei das Verfahren die Schritte umfasst:
Berechnen eines Fehlerkennfelds oder einer Fehlerfunktion unter Verwendung des Verfahrens nach einem der Ansprüche 1 bis 11,
Treiben des Abtasttasters entlang des Abtastpfads, während Tasterdaten gesammelt werden,
Analysieren der gesammelten Tasterdaten, um einen Versatz des Objekts zu bestimmen, wobei der Versatz des Objekts eine Verschiebung und/oder Drehung und/oder Skalierung des Objekts ist, und
Korrigieren des gemessenen Versatzes des Objekts unter Verwendung des Fehlerkennfeldes oder der Fehlerfunktion.

14. Computerprogramm, das Anweisungen umfasst und das, wenn es auf einem geeigneten Computer ausgeführt wird, angepasst ist, eine Vorrichtung nach Anspruch 15 zu veranlassen, das Verfahren nach einem der Ansprüche 1 bis 11 und 13 zu implementieren.

15. Vorrichtung zum Messen eines Objekts, umfassend eine Werkzeugmaschine, die einen Abtasttaster trägt, wobei die Werkzeugmaschine einen Controller zum Antreiben des Abtasttasters entlang eines vorprogrammierten Abtastpfades relativ zum Objekt umfasst, wobei der Abtasttaster angeordnet ist, um Tasterdaten zu sammeln, die eine räumliche Beziehung der Fläche des Objekts relativ zum Abtasttaster beschreiben, während der Abtastpfad durchlaufen wird, wobei die Vorrichtung angeordnet ist zum;
a) Treiben des Abtasttasters entlang des Abtastpfads, während Tasterdaten gesammelt werden, die die Position von Punkten an der Fläche des Objekts beschreiben,
b) Analysieren der bei Schritt (a)gesammelten Tasterdaten, um einen Versatz des Objekts zu bestimmen, wobei der Versatz des Objekts eine Verschiebung und/oder Drehung und/oder Skalierung des Objekts ist,
c) Verschieben und/oder Drehen und/oder Skalieren des Abtastpfads relativ zum Objekt um einen bekannten Betrag und Wiederholen der Schritte (a) und (b), um den Versatz des Objekts neu zu bestimmen, und
d) Erzeugen und Speichern eines Fehlerkennfeldes oder einer Fehlerfunktion, das/die die Differenz zwischen dem neu bestimmten Versatz und einem Versatz beschreibt, der sich voraussichtlich aus der angewendeten Verschiebung und/oder Drehung und/oder Skalierung des Abtastpfads relativ zum Objekt ergibt.

## Revendications

1. Procédé visant à mesurer un objet au moyen d'une machine-outil portant un palpeur de balayage, la machine-outil étant agencée pour piloter le palpeur de balayage sur un trajet de balayage préprogrammé par rapport à l'objet et le palpeur de balayage étant agencé pour collecter des données de palpage décrivant une relation spatiale de la surface de l'objet par rapport au palpeur de balayage pendant le parcours du trajet de balayage, le procédé comprenant les étapes suivantes :
a) piloter le palpeur de balayage sur le trajet de balayage tout en collectant des données de palpage,
b) analyser les données de palpage collectées à l'étape (a) pour déterminer un décalage de l'objet, le décalage de l'objet étant une translation et/ou une rotation et/ou un changement d'échelle de l'objet,
c) effectuer une translation et/ou une rotation et/ou changer l'échelle du trajet de balayage par rapport à l'objet selon une dimension connue et répéter les étapes (a) et (b) pour redéterminer le décalage de l'objet, et
d) générer une carte ou fonction d'erreurs qui décrit la différence entre le décalage redéterminé et un correcteur attendu comme étant le résultat de la translation et/ou de la rotation et/ou du changement d'échelle appliqué(e) du trajet de balayage par rapport à l'objet.

2. Procédé selon la revendication 1, dans lequel l'étape (c) est répétée une pluralité de fois afin de déterminer une pluralité de décalages pour la pluralité de trajets de balayage ayant fait l'objet d'une translation et/ou d'une rotation.

3. Procédé selon l'une quelconque des revendications précédentes, dans lequel le correcteur déterminé à l'étape (b) décrit la translation et/ou la rotation et/ou le changement d'échelle de l'objet par rapport à une position et/ou une orientation nominale de l'objet.

4. Procédé selon l'une quelconque des revendications précédentes, dans lequel l'objet a un décalage connu et une correction de décalage est calculée, laquelle décrit la différence entre le décalage déterminé à l'étape (b) et le décalage connu, dans lequel le décalage connu est déterminé par l'exploitation du palpeur de balayage dans un mode déclenchement par contact pour mesurer une pluralité de points sur la surface de l'objet.

5. Procédé selon la revendication 4, dans lequel la correction de décalage est également appliquée à chaque décalage redéterminé.

6. Procédé selon l'une quelconque des revendications précédentes, dans lequel l'analyse des données de palpage à l'étape (b) est réalisée sans utiliser l'une quelconque des données de position machine lesquelles sont générées par la machine-outil pendant que le parcours du trajet de balayage.

7. Procédé selon l'une quelconque des revendications précédentes, dans lequel le palpeur de balayage a une plage opérationnelle et la translation et/ou la rotation et/ou le changement d'échelle appliqué(e) à l'étape (c) produit un mouvement relatif entre le palpeur de balayage et l'objet qui maintient le palpeur de balayage dans la plage opérationnelle pendant la répétition de l'étape (a).

8. Procédé selon l'une quelconque des revendications précédentes, dans lequel la translation et/ou la rotation appliquée à l'étape (c) produit un mouvement relatif entre le palpeur de balayage et l'objet de moins de 2 mm.

9. Procédé selon l'une quelconque des revendications précédentes, dans lequel l'objet est fixé au banc de la machine-outil, et l'étape (c) consiste à appliquer une rotation ou une translation au trajet de balayage afin d'introduire la translation et/ou la rotation au trajet de balayage par rapport à l'objet.

10. Procédé selon l'une quelconque des revendications précédentes, dans lequel le palpeur de balayage comprend un stylet ayant une pointe pour entrer en contact avec l'objet et au moins un transducteur pour mesurer le fléchissement du stylet.

11. Procédé selon l'une quelconque des revendications précédentes, dans lequel le palpeur de balayage est un palpeur de balayage multidirectionnel à sortie unique qui génère des données de palpage décrivant seulement l'ampleur du fléchissement du stylet.

12. Procédé selon l'une quelconque des revendications précédentes, comprenant les étapes consistant à : retirer l'objet de la machine-outil, placer un objet nominalement identique à une position nominalement identique sur la machine-outil, piloter le palpeur de balayage sur le trajet de balayage tout en collectant des données de palpage, calculer un décalage à partir des données de palpage collectées, et corriger le décalage en utilisant la carte ou la fonction d'erreurs générée à l'étape (d).

13. Procédé visant à mesurer un objet au moyen d'une machine-outil portant un palpeur de balayage, la machine-outil étant agencée pour piloter le palpeur de balayage sur un trajet de balayage préprogrammé par rapport à l'objet et le palpeur de balayage étant agencé pour collecter des données de palpage décrivant une relation spatiale de la surface de l'objet par rapport au palpeur de balayage pendant le parcours du trajet de balayage ; le procédé comprenant les étapes consistant à :
calculer une carte ou fonction d'erreurs en utilisant le procédé selon l'une quelconque des revendications 1 à 11
piloter le palpeur de balayage sur le trajet de balayage tout en collectant des données de palpage,
analyser les données de palpage collectées afin de déterminer un décalage de l'objet, le décalage de l'objet étant une translation et/ou une rotation et/ou un changement d'échelle de l'objet, et
corriger le décalage mesuré de l'objet en utilisant ladite carte ou fonction.

14. Logiciel comprenant des instructions qui, lors de leur exécution sur un ordinateur adéquat, est conçu pour faire qu'un appareil selon la revendication 15 mette en œuvre le procédé selon l'une quelconque des revendications 1 à 11 et 13.

15. Appareil servant à mesurer un objet, comprenant une machine-outil portant un palpeur de balayage, la machine-outil comprenant un contrôleur pour piloter le palpeur de balayage sur un trajet de balayage préprogrammé par rapport à l'objet, le palpeur de balayage étant agencé pour collecter des données de palpage décrivant une relation spatiale à la surface de l'objet par rapport au palpeur de balayage pendant le parcours du trajet de balayage, l'appareil étant conçu pour :
a) piloter le palpeur de balayage sur le trajet de balayage tout en collectant des données de palpage décrivant la position de points à la surface de l'objet,
b) analyser les données de palpage collectées à l'étape (a) pour déterminer un décalage de l'objet, le décalage de l'objet étant une translation et/ou une rotation et/ou un changement d'échelle de l'objet,
c) effectuer une translation et/ou une rotation et/ou un changement d'échelle du trajet de balayage par rapport à l'objet selon une dimension connue et répéter les étapes (a) et (b) pour redéterminer le décalage de l'objet, et
d) générer et enregistrer une carte ou fonction d'erreurs qui décrit la différence entre le décalage redéterminé et un correcteur attendu comme étant le résultat de la translation et/ou la rotation et/ou du changement d'échelle appliqué(e) du trajet de balayage par rapport à l'objet.
